# EUROPÄISCHE PATENTSCHRIFT

(11) **EP 1 644 179 B1**
(45) Veröffentlichungstag und Bekanntmachung des Hinweises auf die Patenterteilung: **17.01.2007**
(21) Anmeldenummer: 04740455.3
(22) Anmeldetag: 30.06.2004
(51) Int. Cl.: B29C 55/02, B29C 59/02, G02B 5/18, H01L 21/00

(54) **VERFAHREN ZUR STRUKTURIERUNG DER OBERFLÄCHE EINES SUBSTRATS**
MEHTOD FOR STRUCTURING A SUBSTRATE SURFACE
PROCEDE DE STRUCTURATION DE LA SURFACE D'UN SUBSTRAT

(30) Priorität: 11.07.2003 DE 10331714
(43) Veröffentlichungstag der Anmeldung: 12.04.2006
(73) Patentinhaber: Micronas GmbH, 79108 Freiburg (DE)
(72) Erfinder: LEHMANN, Mirko Dr., 79117 Freiburg (DE)
(74) Vertreter: Huwer, Andreas
(86) Internationale Anmeldenummer: PCT/EP2004/007073
(87) Internationale Veröffentlichungsnummer: WO 2005/007387

(56) Entgegenhaltungen:
- DE-A- 19 604 953
- DE-A- 19 946 252

## Beschreibung

Die Erfindung betrifft ein Verfahren zur Strukturierung der Oberfläche eines Substrats, wobei das Substrat bereitgestellt und danach an einem Oberflächenbereich des Substrats die Struktur erzeugt wird, indem auf den Oberflächenbereich mindestens eine Lösung aufgebracht wird, die wenigstens einen in einem Lösungsmittel gelösten Feststoff enthält, wobei das Lösungsmittel derart von der Oberfläche des Substrats entfernt wird, dass der Feststoff zurückbleibt

Ein derartiges Verfahren zur Herstellung eines Biochips ist aus T. Vo-Dinh et al., DNA Biochip Using a Phototransistor Integrated Circuit, Analytical Chemistry, Band 71, Nr. 2, Seite 358 ff. (15. Januar 1999) bekannt. Dabei wird zunächst ein sogenanntes Microarray hergestellt, indem auf einer als Substrat dienenden Nitrozellulosemembran eine Struktur aufgebracht wird, die eine Matrix mit einer Vielzahl von Feldern aufweist, in denen unterschiedliche biologischen Rezeptoren angeordnet sind. Bei der Herstellung des Microarrays werden die Rezeptoren mittels einer mit einer Picopumpe verbundenen Kapillarnadel in flüssiger Form auf das Substrat aufgebracht. Die Kapillarnadel hat einen Kapillardurchmesser von etwa 100 µm, so dass die Strukturgröße der mit Hilfe der Kapillarnadel auf das Substrat aufgebrachten Felder etwa im 100 µm-Bereich liegt. Das Microarray dient zum qualitativen und/oder quantitativen Nachweis des Vorhandenseins von bestimmten Liganden in einer zu analysierenden Probe. Die Rezeptoren der einzelnen Bereiche unterscheiden sich jeweils in ihrer Spezifität gegenüber einem bestimmten, nachzuweisenden Liganden. Dadurch ist es möglich, die Probe mit Hilfe des Microarrays gleichzeitig auf das Vorhandensein mehrerer unterschiedlicher Liganden zu untersuchen. Zur Detektion eines in der Probe enthaltenen Liganden wird diese mit den auf dem Microarray immobilisierten Rezeptoren in Kontakt gebracht. Dabei bindet der Rezeptor, der für den nachzuweisenden Liganden spezifisch ist, an den Liganden. Der dadurch entstandene Rezeptor-Liganden-Komplex lässt sich mit Hilfe von Fluoreszenz nachweisen. Die einzelnen, die Rezeptoren enthaltenden Bereiche der Matrix werden dazu mit optischer Strahlung bestrahlt, welche die Rezeptor-Liganden-Komplexe zur Emission von Lumineszenzstrahlung anregt. Zur Detektion der Lumineszenzstrahlung wird das Microarray derart an der Oberfläche eines CCD-Sensor-Arrays positioniert, dass die einzelnen Felder des Microarrays jeweils eine Photozelle des CCD-Sensor-Arrays überdecken. Nachteilig ist dabei jedoch, dass die Felder der Matrix noch relativ große Abmessungen aufweisen, die - wie eingangs bereits erwähnt - etwa im 100 µm-Bereich liegen. Die Strukturgrößen eines typischen CCD-Sensor-Arrays beträgt jedoch nur etwa 1 µm. Würde man also ein Microarray mit 1000 x 1000 Feldern auf einem CCD-Sensor-Array positionieren, würde allein für die Phototransistor-Array des CCD-Sensors bereits eine Chipfläche von 100 x 100 mm benötigt, was einen solchen Halbleiterchip sehr teuer und unrentabel machen würde.

Aus DE 199 59 346 A1 ist ein Verfahren bekannt, bei dem die Oberfläche eines Substrats mit einer für eine aufzubringende Schicht undurchlässigen Maskierungsschicht versehen und die Substanz danach in von der Maskierungsschicht nicht bedeckte Substratbereiche eingebracht wird. Danach wird eine Wärmebehandlung durchgeführt, bei der die Substanz in einen von der Maskierungsschicht überdeckten Substratbereich diffundiert. Dabei stellt sich ausgehend vom Rand der Maskierungsschicht mit zunehmendem Abstand vom Rand nach innen in dem von der Maskierungsschicht überdeckten Bereich ein Konzentrationsgefälle der Substanz ein. Nun wird die Maskierungsschicht entfernt, um den darunter befindlichen Substratbereich freizulegen. Dann wird eine in dem freigelegten Substratbereich befindliche oberflächennahe Schicht des Substrats mittels einer chemischen Umwandlungsreaktion in eine Beschichtung mit einem dem Konzentrationsgefälle in der Substanz entsprechenden Schichtdickenverlauf umgewandelt. Danach wird die Beschichtung solange mit einem Ätzmittel in Kontakt gebracht, bis in einem Teilbereich der Beschichtung, dessen Fläche kleiner ist als die von der ursprünglichen Maskierungsschicht überdeckte Substratfläche und in dem die Dicke der Beschichtung gegenüber den übrigen Bereichen der Beschichtung reduziert ist, das von dem Teilbereich überdeckte Substratgebiet freigelegt ist. Nachdem die Beschichtung auf diese Weise bereichsweise abgetragen wurde, wird in dem freigelegten Oberflächenbereich eine Metallschicht elektrisch abgeschieden, deren Abmessungen kleiner sind als die Abmessungen der ursprünglichen Maskierungsschicht. Das Verfahren hat sich in der Praxis insbesondere zur Herstellung kleiner metallischer Elektroden bewährt. Ein Nachteil des Verfahrens besteht jedoch noch darin, dass es vergleichsweise aufwändig ist und dass es auf bestimmte Substratwerkstoffe beschränkt ist. Insbesondere ist das Verfahren zum Aufbringen einer Biokomponenten aufweisenden Struktur auf das Substrat praktisch nicht geeignet.

Aus Périchon Lacour, Stéphanie et al., 'Stretchable gold conductors on elastomeric substrates', Applied Physics Letters, Band 82, Nr. 15, Seiten 2404-2406 ist ferner ein Verfahren zum Herstellen eines dehnbaren elektrischen Leiters bekannt, der auf einem elastischen Substrat dünne Goldstreifen aufweist die mit einer Druckspannung beaufschlagt sind. Zur Beaufschlagung mit der, Druckspannung wird das Substrat zunächst vorgedehnt. Dann werden die Goldstreifen durch eine Schattenmaske hindurch auf das Substrat abgeschieden. Danach wird die Dehnung des Substrats rückgängig gemacht und anschließend wird die elektrische Leitfähigkeit der Goldstreifen untersucht. Aufgrund dieser Untersuchung kommen die Autoren zu dem Ergebnis, dass es möglich ist, dehnbare elektrische Leiter für eine Verwendung in dreidimensionalen elektronischen Schaltkreisen herzustellen.

Aus DE 199 46 252 A1 ist ein gattungsfremdes Verfahren zur Herstellung einer Oberflächenstruktur auf einer Substratoberfläche eines aus einem elastischen Werkstoff bestehenden Substrats bekannt, bei dem das Substrat zunächst durch mechanische Dehnung in einen definierten Spannungszustand überführt wird und danach durch Beschuss mit Argon-lonen in einer oberflächennahen Schicht strukturell verändert wird. Die Strukturveränderung bewirkt eine Änderung des Elastizitätsmoduls und den Abbau der mechanischen Spannungen in der oberflächennahen Schicht. Nach dem Entspannen des gedehnten Substrats weist dieses an seiner Oberfläche eine geordnete Welligkeit auf. Das Verfahren eignet sich jedoch nicht zur Herstellung von Substratoberflächen mit einer vorgegeben Geometrie mit vorbestimmten Abmessungen.

Aus DE 196 04 953 A1 ist ferner ein gattungsfremdes Verfahren zur Herstellung eines mehrschichtigen elastischen Flächengebildes aus einer gummielastischen Trägerschicht und einer an Verbindungsstellen damit verbundenen unelastischen Schicht bekannt. Dabei wird die unelastische Schicht von einer glatten Struktur in Wellen gelegt und danach wird eine entspannte gummielastische Trägerschicht zugeführt und an den Verbindungsstellen mit den Wellenbergen der unelastischen Schicht verbunden. Die Wellenstruktur des mittels des Verfahrens hergestellten Flächengebildes weist jedoch noch eine relativ große Strukturgröße auf

Aufgabe der Erfindung ist es, ein Verfahren der Eingangs genannten Art zu schaffen, das es auf einfache Weise ermöglicht, auf dem Substrat eine Struktur mit reduzierter Strukturgröße zu erzeugen.

Diese Aufgabe wird mit den Merkmalen des Anspruchs 1 gelöst.

Das Lösungsmittel kann vor, während und/oder nach dem Reduzieren oder Entfernen der Zugspannung von der Oberfläche des Substrats entfernt werden. Bevorzugt erfolgt das Entfernen des Lösungsmittels jedoch nach dem Reduzieren oder Entfernen der Zugspannung. Dadurch wird vermieden, dass bei dem Schrumpfungsprozess mechanische Spannungen in die Struktur und/oder über die

Struktur in das Substrat eingebracht werden. Die Lösung kann durch Besprühen, beispielsweise mit Hilfe eines Strahldruckers, oder durch Bedrucken im Hochdruck, Tiefdruck und/oder Tampondruck auf das Substrat aufgebracht werden. Der Feststoff kann eine wasserlösliche organische und/oder anorganische chemische Substanz sein oder eine solche enthalten, wie sie beispielsweise in der kombinatorischen Chemie verwendet wird.

Nach dem Erzeugen der Struktur wird die Größe der Struktur reduziert, indem die Zugspannung reduziert oder entfernt wird, so dass sich das Substrat zusammenzieht. Dabei verkleinern sich die Abmessungen der auf dem Substrat befindlichen Struktur. Auf diese Weise lässt sich die Struktur in einer Größe herstellen, die kleiner ist als die kleinste Strukturgröße, die mit dem für das Erzeugen der Struktur verwendeten Strukturierungsverfahren unmittelbar herstellbar ist. Das Verfahren ermöglicht es, die Größen von Strukturen, die mit unterschiedlichen, von der Größe nicht zueinander passenden Technologien hergestellt sind, aneinander anzupassen, so dass die mit diesen Technologien hergestellten Strukturen miteinander kombiniert werden können. Die aufgrund der Zugspannung in dem Substrat auftretende Dehnung, also die durch die Zugspannung bewirkte Längenänderung des Substrats dividiert durch die Abmessung des ungedehnten Substrats, kann mindestens 10%, ggf. mindestens 50%, eventuell mindestens 100%, insbesondere mindestens 200% und bevorzugt mindestens 1000% betragen.

Die oben genannte Aufgabe wird auch dadurch gelöst, dass das Substrat bereitgestellt und auf einen Oberflächenbereich des Substrats, der gegenüber einem mit der Struktur zu versehenden Oberflächenbereich vergrößert ist, mindestens eine Lösung aufgebracht wird, die wenigstens einen in einem Lösungsmittel gelösten Feststoff enthält, wobei der Werkstoff des Substrats durch Aufbringen einer Druckspannung derart elastisch gestaucht wird, dass sich die Größe des Oberflächenbereichs, auf den die Lösung aufgebracht wurde, auf die Größe des mit der Struktur zu versehenden Oberflächenbereichs reduziert, wobei das Lösungsmittel derart von der Oberfläche des Substrats entfernt wird, dass der Feststoff zurückbleibt.

Dabei wird die Druckspannung vorzugsweise dauerhaft aufrechterhalten. Auch auf diese Weise lässt sich die Struktur in einer Größe herstellen, die kleiner ist als die kleinste Strukturgröße, die mit dem für das Erzeugen der Struktur verwendeten Strukturierungsverfahren unmittelbar herstellbar ist. Das Lösungsmittel kann vor, während und/oder nach dem Aufbringen einer Druckspannung von der Oberfläche des Substrats entfernt werden.

Vorteilhaft ist, wenn das Substrat als Platte oder Folie ausgebildet ist und wenn der Werkstoff des Substrats durch zentrische Streckung in der Erstreckungsebene des Substrats radial zu einem vorzugsweise etwa mittig zu dem Substrat angeordneten Zentrum gedehnt und/oder gestaucht wird. Durch diese Maßnahme ist es möglich, die Abmessungen der Struktur in ihrer Erstreckungsebene in quer zueinander verlaufenden Richtungen zu reduzieren, um diese beispielsweise maßstabsgerecht zweidimensional zu verkleinern. Bei der Erzeugung der Struktur ist zu beachten, dass es sich bei der zentrischen Streckung um eine Abbildung handelt, bei der sich die Fläche nichtlinear zu der Dehnung verändert. Auch kann es zu einer ungleichmäßigen Dehnung des Substrats kommen, wenn die Zug- und/oder Druckspannung ungleichmäßig oder unsymmetrisch in das Substrat eingebracht wird. Die gegenüber der herzustellenden Struktur vergrößerte Struktur muss dann entsprechend verzerrt auf dem Substrat erzeugt werden, um diese Ungleichmäßigkeiten zu kompensieren.

Bei einer anderen Ausführungsform des Verfahrens wird der Werkstoff des Substrats durch eindimensionale Streckung in der Erstreckungsebene des Substrats gedehnt und/oder gestaucht Das Substrat wird also in einer Richtung gegen die Rückstellkraft seines Werkstoffs lang gezogen bzw. zusammengedrückt. Bei diesem Verfahren ist bei einem homogenen Substrat mit über seine Erstreckungsebene konstanter Dicke die Veränderung des Flächenmaßstabs über die Fläche des Substrats konstant.

Bei einer vorteilhaften Ausführungsform der Erfindung werden die Lösungen derart auf den Oberflächenbereich aufgebracht, dass an der Oberfläche des Substrats eine Beschichtung gebildet wird, die eine Vielzahl von matrixförmig nebeneinander angeordneten, unterschiedlichen Beschichtungsbereichen aufweist. Eine derartige Beschichtung kann durch Bedrucken des Substrats mit den Lösungen einfach und kostengünstig auf dem Substrat erzeugt werden.

Bei einer bevorzugten Ausführungsform der Erfindung wird zum Erzeugen der Struktur mindestens ein Biomolekül auf das Substrat aufgebracht, das vorzugsweise an diesem anbindet. Das Biomolekül kann Nukleinsäuren oder Derivate davon (DNA RNA, PNA, LNA Oligonukleotide, Plasmide, Chromosomen), Peptide, Proteine (Enzym, Protein, Oligopeptide, zelluläre Rezeptorproteine und deren Komplexe, Peptidhormone, Antikörper und deren Fragmente), Kohlenhydrate und deren Derivate, insbesondere glykosylierte Proteine und Glycoside, Fette, Fettsäuren und/oder Lipide umfassen. Als Lösungsmittel ist vorzugsweise Wasser vorgesehen. Das Verfahren ermöglicht es, derartige Biomoleküle ohne die Verwendung chemischer Substanzen auf der Oberfläche des Substrats zu immobilisieren. Das Biomolekül kann kovalent oder nicht kovalent immobilisiert werden. Da sich das Substrat nach dem Reduzieren oder Entfernen der Zugspannung zusammenzieht und/oder beim Komprimieren verkleinert, reduziert sich die Fläche, auf der die Biomoleküle immobilisiert sind. Da die Menge der Biomoleküle konstant bleibt, nimmt dabei die Intensität bzw. Konzentration (Anzahl der Teilchen pro Fläche) der Biomoleküle zu.

Vorteilhaft ist, wenn das Substrat aus einem optisch transparenten Werkstoff besteht. Das Verfahren kann dann besonders gut zum Herstellen einer Struktur für einen optischen Sensor verwendet werden.

Bei einer zweckmäßigen Ausführungsform des Verfahrens enthält das Substrat mindestens ein Elastomer, insbesondere Polypyrrol, Polyacetylen und/oder Polydimethylsiloxane (PDMS). Derartige Substate sind aus Eung Ju Oh et al., Electrochemical synthesis and characterization of strechable polypryrrole films, Molecular Crystals an Liquid Crystals, Band 371, Seite 243 ff. (2001), Akoi, Y., Current progress in synthesis of polyacetylene films, Synthetic Metals, Band 84, Nr. 1-3, Seite 307 ff. (1.. Jan. 1997) und Armani, Deniz et al., Re-configurable Fluid Circuits by PDMS Elastomer Micromatching, 12th International Conference on MEMS, MEMS 99, Orland (1998), Seite 222-227 bekannt und ermöglichen eine hohe elastische Dehnung bzw. Schrumpfung oder Stauchung.

Besonders vorteilhaft ist, wenn das Substrat nach dem Reduzieren oder Entfernen der Zugspannung und/oder nach dem Aufbringen der Druckspannung auf eine vorzugsweise in einen Halbleiterchip integrierte Detektionsvorrichtung aufgebracht wird, vorzugsweise derart, dass die Beschichtungsbereiche jeweils wenigstens einen Sensor der Detektionsvorrichtung abdecken. Mit diesem Verfahren lassen sich insbesondere Biochips, die eine Vielzahl von matrixförmig angeordneten Feldern aufweisen, in denen von Biomolekülen überdeckte Sensoren angeordnet sind, kostengünstig herstellen. Insbesondere kann aufgrund der durch den Schrumpfungsprozess reduzierten Abmessung(en) der auf dem Substrat erzeugten Struktur(en) teuere Chipfläche eingespart werden. Mit dem Verfahren kann der Abstand zwischen den Beschichtungsbereichen oder den Biomolekülen um mindestens 10%, ggf um mindestens ein Drittel, eventuell um mindestens die Hälfte, insbesondere um mindestens zwei Drittel und vorzugsweise um mindestens 90% reduziert werden.

Bei einer bevorzugten Ausführungsform des Verfahrens enthält das Substrat einen Keramikwerkstoff, vorzugsweise tetragonales Zirkoniumoxid, Magnesiumaluminiumoxid-Spinel, und/oder Alpha-Aluminiumoxid. Ein derartiger keramischer Werkstoff ist in B.-N. Kim et al., A high-strain-rate superelastic ceramic, Nauture, Band 413, Seite 288 (20.09.2001) beschrieben. Mit dem Verfahren lassen sich also auch Keramiksubstrate strukturieren, weshalb das Verfahren auch in der Mikrosystemtechnik zur Anwendung kommen kann.

Nachfolgend ist ein Ausführungsbeispiel der Erfindung anhand der Zeichnung näher erläutert. Es zeigen:
- Fig. 1: eine Aufsicht auf ein durch eine Kunststofffolie gebildetes Substrat,
- Fig. 2: eine Aufsicht auf das Substrat nach dem dieses durch zentrische Streckung elastisch gedehnt wurde,
- Fig. 3: das in Fig. 2 gezeigte Substrat, nachdem an dessen Oberfläche eine Struktur erzeugt wurde,
- Fig. 4: eine Aufsicht auf das die Struktur aufweisende Substrat, nachdem das Substrat entgegen der Dehnung auf seine in Fig. 1 gezeigten ursprünglichen Abmessungen verkleinert wurde,
- Fig. 5: eine Aufsicht auf einen Halbleiterchip, in den ein Array mit Photozellen integriert ist,
- Fig. 6: den in Fig. 5 gezeigten Halbleiterchip nach dem Beschichten mit dem in Fig. 4 gezeigten, die Struktur aufweisenden Substrat, und
- Fig. 7: einen Querschnitt durch einen Halbleiterchip, auf den das die Struktur aufweisende Substrat aufgelegt ist.

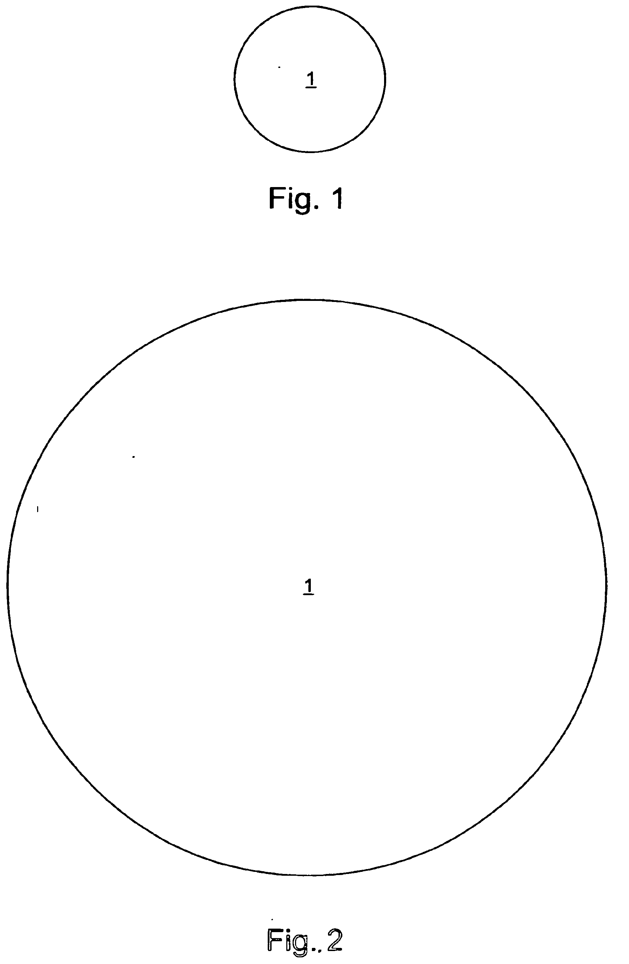

Bei einem Verfahren zur Strukturierung einer Oberfläche wird ein etwa kreisscheibenförmiges Substrat 1 bereitgestellt, dass als eine dünne Elastomerfolie ausgebildet ist, die sich in einer Ebene erstreckt, die der Zeichenebene in Fig. 1 entspricht.

In einem zweiten Verfahrensschritt wird das Substrat in seiner Erstreckungsebene durch zentrische Streckung elastisch gedehnt, wobei das Zentrum der Streckung etwa im Mittelpunkt der Kreisscheibe angeordnet ist. Das Substrat 1 wird dazu zunächst an mehreren, vorzugsweise gleichmäßig über den Umfang verteilten Befestigungsstellen seines Außenrands eingespannt, um danach die Befestigungsstellen etwa radial vom Mittelpunkt der Kreisscheibe weg nach außen zu verschieben. Dabei wird in dem Substrat 1 eine Zugspannung erzeugt, welche die Elastomerfolie elastisch verformt. Durch einen Vergleich von Fig. 1 und 2 ist erkennbar, dass der Durchmesser des Substrats 1 nach der Dehnung etwa dem Vierfachen und die Grundfläche des Substrats etwa der sechzehnfachen Grundfläche des unverformten Substrats entspricht.

In einem dritten Verfahrensschritt wird an der Oberfläche des Substrats 1 eine Struktur erzeugt. Mit Hilfe eines Strahldruckers werden dazu in einer Vielzahl von matrixförmig angeordneten, durch Zwischenräume voneinander beabstandeten Feldern 2 unterschiedliche Lösungen auf das Substrat 1 aufgebracht. Die einzelnen Lösungen enthalten jeweils ein Lösungsmittel und mindestens ein darin gelöstes DNA-Molekül. Letzteres bindet an der Oberfläche des Substrats an und bildet einen Beschichtungsbereich.

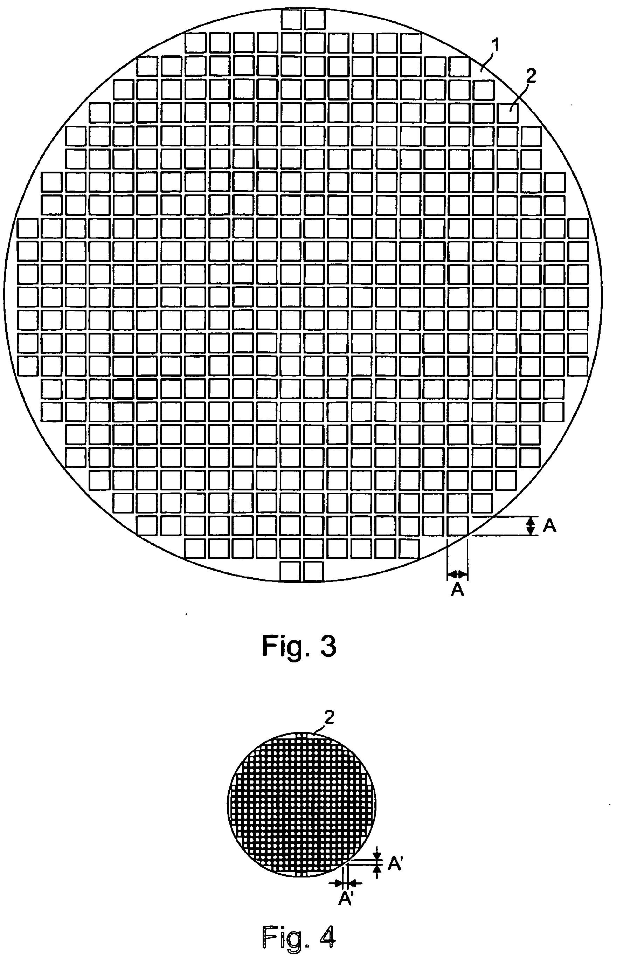

In einem vierten Verfahrensschritt wird die Zugspannung entfernt, wodurch sich das Substrat 1 mit der darauf befindlichen Struktur aufgrund der Rückstellkraft des elastischen Substratwerkstoffs entgegen der Dehnung etwa auf seine ursprüngliche Größe zusammenzieht. Die Befestigungsstellen, an denen das Substrat eingespannt ist, werden dazu radial auf den Mittelpunkt der Kreisscheibe zu in ihre ursprüngliche Lage zurückbewegt. Durch einen Vergleich von Fig. 3 und 4 ist erkennbar, dass sich durch diese Schrumpfung die Abmessung A, welche die Felder 2 der Struktur ursprünglich aufwiesen, auf das Maß A' reduziert, das etwa ein Viertel der Abmessung A entspricht. Nun wird das in den Lösungen enthaltene Lösungsmittel von der Oberfläche des Substrats entfernt, so dass nur noch die Beschichtungsbereiche auf dem Substrat 1 verbleiben.

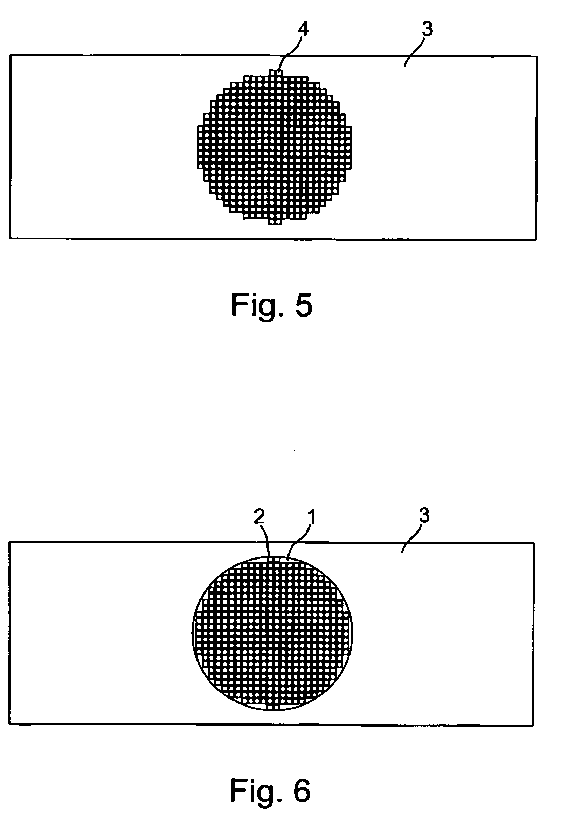

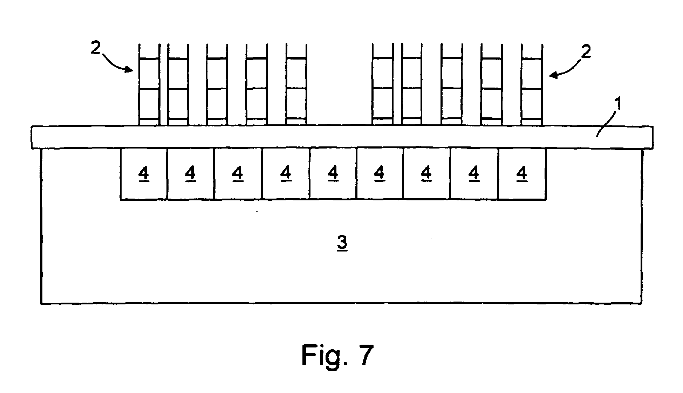

In einem fünften, in Fig. 5 gezeigten Verfahrensschritt wird ein in der Zeichnung nur schematisch dargestellter Halbleiterchip 3 bereitgestellt, in den eine Vielzahl von optischen Sensoren 4 integriert sind. Wie in Fig. 7 erkennbar ist, sind diese sind in einem oberflächennahen Bereich des Halbleiterchips 3 angeordnet.

In einem sechsten Verfahrensschritt wird die der Struktur abgewandte Rückseite des Substrats 1 derart auf der Oberfläche des Halbleiterchips 3 positioniert, dass die einzelnen Beschichtungsbereiche jeweils mindestens einen optischen Sensor 4 überdecken (Fig. 6 und 7). Der so erhaltene Biosensor kann dann gegebenenfalls außerhalb der die Beschichtungsbereiche aufweisenden Struktur mit einem Kunststoffgehäuse umspritzt werden.

Bei dem Verfahren zur Strukturierung der Oberfläche eines Substrats 1 wird also ein bereitgestelltes Substrat 1 durch Aufbringen einer Zugspannung derart elastisch gedehnt, dass sich ein Oberflächenbereich des Substrats 1, in dem eine Struktur erzeugt werden soll, vergrößert. Danach wird in dem Oberflächenbereich eine Struktur erzeugt, die gegenüber einer herzustellenden Struktur vergrößert ist. Dann wird die Dehnung des Substrats 1 durch Reduzieren oder Entfernen der Zugspannung zumindest teilweise rückgängig gemacht, derart, dass sich die Größe der Struktur 1 auf die Größe der herzustellenden Struktur 1 reduziert. In dem Werkstoff des Substrats 1 kann auch eine Druckspannung erzeugt werden, um die Größe der Struktur auf die Größe der herzustellenden Struktur zu reduzieren. Der Oberflächenbereich kann auch mit einer Struktur versehen werden, die gegenüber der herzustellenden Struktur vergrößert ist. Danach wird der Werkstoff des Substrats 1 durch Aufbringen einer Druckspannung derart elastisch gestaucht wird, dass sich die Größe der Struktur auf die Größe der herzustellenden Struktur reduziert. Zum Beschichten des Substrats 1 wird mindestens eine Lösung auf das Substrat 1 aufgebracht, die wenigstens einen in einem Lösungsmittel gelösten Feststoffenthält Das Lösungsmittel wird danach von der Oberfläche des Substrats 1 entfernt, derart, dass der Feststoff zurückbleibt

## Patentansprüche

1. Verfahren zur Strukturierung der Oberfläche eines Substrats (1), wobei das Substrat (1) bereitgestellt und der Werkstoff des Substrats (1) durch Aufbringen einer Zugspannung derart elastisch gedehnt wird, dass sich ein zu strukturierender Oberflächenbereich des Substrats (1) vergrößert, wobei danach auf den vergrößerten Oberflächenbereich mindestens eine Lösung aufgebracht wird, die wenigstens einen in einem Lösungsmittel gelösten Feststoff enthält, wobei dann die Dehnung durch Reduzieren oder Entfernen der Zugspannung zumindest teilweise rückgängig gemacht wird, derart, dass sich die Größe der Struktur auf die Größe der herzustellenden Struktur reduziert, wobei das Lösungsmittel derart von der Oberfläche des Substrats (1) entfernt wird, dass der Feststoffzurückbleibt.

2. Verfahren zur Strukturierung der Oberfläche eines Substrats (1), wobei das Substrat (1) bereitgestellt und auf einen Oberflächenbereich des Substrats, der gegenüber einem mit der Struktur zu versehenden Oberflächenbereich vergrößert ist, mindestens eine Lösung aufgebracht wird, die wenigstens einen in einem Lösungsmittel gelösten Feststoff enthält, wobei der Werkstoff des Substrats (1) durch Aufbringen einer Druckspannung derart elastisch gestaucht wird, dass sich die Größe des Oberflächenbereichs, auf den die Lösung aufgebracht wurde, auf die Größe des mit der Struktur zu versehenden Oberflächenbereichs reduziert, und wobei das Lösungsmittel derart von der Oberfläche des Substrats (1) entfernt wird, dass der Feststoff zurückbleibt.

3. Verfahren nach Anspruch 1 oder 2, **dadurch gekennzeichnet, dass** das Substrat (1) als Platte oder Folie ausgebildet ist und dass der Werkstoff des Substrats (1) durch zentrische Streckung in der Erstreckungsebene des Substrats (1) radial zu einem vorzugsweise etwa mittig zu dem Substrat (1) angeordneten Zentrum gedehnt und/oder gestaucht wird.

4. Verfahren nach einem der Ansprüche 1 bis 3, **dadurch gekennzeichnet, dass** der Werkstoff des Substrats (1) durch eindimensionale Streckung in der Erstreckungsebene des Substrats (1) gedehnt und/oder gestaucht wird.

5. Verfahren nach einem der Ansprüche 1 bis 4, **dadurch gekennzeichnet dass** die Lösungen derart auf den Oberflächenbereich aufgebracht werden, dass an der Oberfläche des Substrats (1) eine Beschichtung gebildet wird, die eine Vielzahl von matrixförmig nebeneinander angeordneten, unterschiedlichen Beschichtungsbereichen aufweist.

6. Verfahren nach einem der Ansprüche 1 bis 5, **dadurch gekennzeichnet, dass** zum Erzeugen der Struktur mindestens ein Biomolekül auf das Substrat (1) aufgebracht wird, das vorzugsweise an diesem anbindet.

7. Verfahren nach einem der Ansprüche 1 bis 6, **dadurch gekennzeichnet, dass** das Substrat (1) aus einem optisch transparenten Werkstoff besteht

8. Verfahren nach einem der Ansprüche 1 bis 7, **dadurch gekennzeichnet, dass** das Substrat (1) mindesten ein Elastomer enthält, Insbesondere Polypyrrol, Polyacetylen und/oder Polydimethylsiloxane (PDMS).

9. Verfahren nach einem der Ansprüche 1 bis 8, **dadurch gekennzeichnet, dass** das Substrat (1) nach dem Reduzieren oder Entfernen der Zugspannung und/oder nach dem Aufbringen der Druckspannung auf eine vor zugsweise In einen Halbleiterchip (3) integrierte Detektionsvorrichtung aufgebracht wird, vorzugsweise derart, dass die Beschichtungsbereiche jeweils wenigstens einen Sensor (4) der Detektionsvorrichtung abdecken.

10. Verfahren nach einem der Ansprüche 1 bis 9, **dadurch gekennzeichnet, dass** das Substrat (1) einen Keramikwerkstoff enthält, vorzugsweise tetragonales Zirkoniumoxid, Magnesiumaluminiumoxid-Spinel und/oder Alpha-Aluminiumoxid.

## Claims

1. Method for structuring the surface of a substrate (1), the substrate (1) being prepared and the material of the substrate (1) being elastically stretched by applying a tensile stress in such a way that a surface region of the substrate (1) that is to be structured is increased in size, at least one solution which contains at least one solid substance dissolved in a solvent then being applied to the increased surface region, the stretching then being at least partially reversed by reducing or removing the tensile stress in such a way that the size of the structure is reduced to the size of the structure that is to be produced, the solvent being removed from the surface of the substrate (1) in such a way that the solid substance remains behind.

2. Method for structuring the surface of a substrate (1), the substrate (1) being prepared and at least one solution which contains at least one solid substance dissolved in a solvent being applied to a surface region of the substrate that is increased in size in comparison with a surface region that is to be provided with the structure, the material of the substrate (1) being elastically compressed by applying a compressive stress in such a way that the size of the surface region to which the solvent has been applied is reduced to the size of the surface region that is to be provided with the structure, and the solvent being removed from the surface of the substrate (1) in such a way that the solid substance remains behind.

3. Method according to Claim 1 or 2, **characterized in that** the substrate (1) is formed as a sheet or film and **in that** the material of the substrate (1) is stretched and/or compressed by central stretching in the plane of extent of the substrate (1) radially in relation to a centre preferably arranged approximately centrally with respect to the substrate (1).

4. Method according to one of Claims 1 to 3, **characterized in that** the material of the substrate (1) is stretched and/or compressed by one-dimensional stretching in the plane of extent of the substrate (1).

5. Method according to one of Claims 1 to 4, **characterized in that** the solutions are applied to the surface region in such a way that a coating which has a multiplicity of different coating regions arranged next to one another in matrix form is formed on the surface of the substrate (1).

6. Method according to one of Claims 1 to 5, **characterized in that**, to produce the structure, at least one biomolecule is applied to the substrate (1), preferably bonding to the latter.

7. Method according to one of Claims 1 to 6, **characterized in that** the substrate (1) consists of an optically transparent material.

8. Method according to one of Claims 1 to 7, **characterized in that** the substrate (1) contains at least one elastomer, in particular polypyrrole, polyacetylene and/or polydimethyl siloxanes (PDMS).

9. Method according to one of Claims 1 to 8, **characterized in that**, after reducing or removing the tensile stress and/or after applying the compressive stress, the substrate (1) is applied to a detection device, which is preferably integrated in a semiconductor chip (3), preferably applied in such a way that the coating regions respectively cover at least one sensor (4) of the detection device.

10. Method according to one of Claims 1 to 9, **characterized in that** the substrate (1) contains a ceramic material, preferably tetragonal zirconium oxide, magnesium aluminium oxide spinel and/or alpha aluminium oxide.

## Revendications

1. Procédé de structuration de la surface d'un substrat (1), dans lequel le substrat (1) est préparé et le matériau du substrat (1) est étiré élastiquement par application d'une tension de traction de telle sorte qu'une région superficielle à structurer du substrat (1) soit agrandie, puis on applique sur la région superficielle agrandie au moins une solution qui contient au moins une matière solide dissoute dans un solvant, puis l'étirage est au moins partiellement supprimé en réduisant ou en éliminant la tension de traction de telle sorte que la taille de la structure se réduise à la taille de la structure à créer, le solvant étant enlevé de la surface du substrat (1) de telle sorte qu'il reste la matière solide.

2. Procédé de structuration de la surface d'un substrat (1), dans lequel le substrat (1) est préparé et l'on applique, sur une région superficielle du substrat qui est agrandie par rapport à une région superficielle devant être pourvue de la structure, au moins une solution qui contient au moins une matière solide dissoute dans un solvant, le matériau du substrat (1) étant comprimé élastiquement par application d'une tension de compression de telle sorte que la taille de la région superficielle sur laquelle la solution a été appliquée soit réduite à la taille de la région superficielle devant être pourvue de la structure, et le solvant étant enlevé de la surface du substrat (1) de telle sorte qu'il reste la matière solide.

3. Procédé selon la revendication 1 ou 2, **caractérisé en ce que** le substrat (1) est réalisé sous forme de plaque ou de feuille et **en ce que** le matériau du substrat (1) est comprimé et/ou étiré par étirage central dans le plan d'étirage du substrat (1) radialement vers un centre disposé de préférence approximativement au centre du substrat (1).

4. Procédé selon l'une quelconque des revendications 1 à 3, **caractérisé en ce que** le matériau du substrat (1) est comprimé et/ou étiré par étirage unidimensionnel dans le plan d'étirage du substrat (1).

5. Procédé selon l'une quelconque des revendications 1 à 4, **caractérisé en ce que** les solutions sont appliquées sur la région superficielle de telle sorte qu'un revêtement soit formé à la surface du substrat (1), lequel présente une pluralité de régions de revêtement différentes disposées en forme de matrice les unes à côté des autres.

6. Procédé selon l'une quelconque des revendications 1 à 5, **caractérisé en ce que** pour produire la structure, au moins une biomolécule est appliquée sur le substrat (1) et se lie de préférence à celui-ci.

7. Procédé selon l'une quelconque des revendications 1 à 6, **caractérisé en ce que** le substrat (1) se compose d'un matériau optiquement transparent.

8. Procédé selon l'une quelconque des revendications 1 à 7, **caractérisé en ce que** le substrat (1) contient au moins un élastomère, notamment du polypyrrole, du polyacétylène et/ou du polydiméthylsiloxane (PDMS).

9. Procédé selon l'une quelconque des revendications 1 à 8, **caractérisé en ce que** le substrat (1) après la réduction ou l'élimination de la tension de traction et/ou après l'application de la tension de compression est appliqué sur un dispositif de détection de préférence intégré dans une puce à sémi-conducteur (3), de préférence de telle sorte que les régions de revêtement recouvrent à chaque fois au moins un capteur (4) du dispositif de détection.

10. Procédé selon l'une quelconque des revendications 1 à 9, **caractérisé en ce que** le substrat (1) contient un matériau en céramique, de préférence de l'oxyde de zirconium tétragonal, le spinelle - oxyde de magnésium-aluminium et/ou l'oxyde d'aluminium alpha.
